# EUROPEAN PATENT SPECIFICATION

(11) **EP 1 875 299 B1**
(45) Date of publication and mention of the grant of the patent: **05.08.2009**
(21) Application number: 06733190.0
(22) Date of filing: 24.04.2006
(51) Int. Cl.: G02B 27/01

(54) **SYSTEM FOR THE VISUALIZATION OF INFORMATION SUPERIMPOSED UPON REAL IMAGES**
SYSTEM ZUR VISUALISIERUNG VON REALBILDERN ÜBERLAGERTEN INFORMATIONEN
SYSTÈME POUR LA VISUALISATION D'INFORMATIONS SUPERPOSÉES À DES IMAGES RÉELLES

(30) Priority: 22.04.2005 PT 10326405
(43) Date of publication of application: 09.01.2008
(73) Proprietor: YDREAMS - Informática, S.A., P-2829-516 Costa da Caparica (PT)
(72) Inventor: NABAIS NOBRE, Edmundo Manuel, P-1900-363 Lisboa (PT)
(74) Representative: Alves Moreira, Pedro
(86) International application number: PCT/PT2006/000012
(87) International publication number: WO 2006/112743

(56) References cited:
- AZUMA R; BAILLOT Y; BEHRINGER R; FEINER S; JULIER S; MACINTYRE B: "Recent advances in augmented reality" IEEE COMPUTER GRAPHICS AND APPLICATIONS, vol. 21, no. 6, December 2001 (2001-12), pages 34-46, XP002393750
- FURMANSKI C ET AL: "Augmented-reality visualizations guided by cognition:perceptual heuristics for combining visible and obscured information" MIXED AND AUGMENTED REALITY, 2002. ISMAR 2002. PROCEEDINGS. INTERNATIONAL SYMPOSIUM ON SEPT. 30 - OCT. 1, 2002, PISCATAWAY, NJ, USA,IEEE, 30 September 2002 (2002-09-30), pages 215-320, XP010620958 ISBN: 0-7695-1781-1
- AZUMA R ET AL: "Evaluating label placement for augmented reality view management" MIXED AND AUGMENTED REALITY, 2003. PROCEEDINGS. THE SECOND IEEE AND ACM INTERNATIONAL SYMPOSIUM ON 7-10 OCT. 2003, PISCATAWAY, NJ, USA,IEEE, 7 October 2003 (2003-10-07), pages 66-75, XP010662797 ISBN: 0-7695-2006-5
- AZUMA R ET AL: "Tracking in unprepared environments for augmented reality systems" COMPUTERS AND GRAPHICS, PERGAMON PRESS LTD. OXFORD, GB, vol. 23, no. 6, December 1999 (1999-12), pages 787-793, XP004187823 ISSN: 0097-8493
- PATENT ABSTRACTS OF JAPAN vol. 1997, no. 08, 29 August 1997 (1997-08-29) -& JP 09 096766 A (FUJI PHOTO OPTICAL CO LTD), 8 April 1997 (1997-04-08)
- PATENT ABSTRACTS OF JAPAN vol. 016, no. 522 (P-1445), 27 October 1992 (1992-10-27) -& JP 04 195014 A (SHIMADZU CORP), 15 July 1992 (1992-07-15)

## Description

### Goal of invention

The invention is a visualization device to be used, for example, in scenic viewers. It works by superimposing in real-time images generated by a computer on a real image captured by a lens as in a telescope. It can be used for entertainment, educational or commercial purposes.

This device, the Virtual Sightseeing™, replaces and adds innovative functionalities to existing telescopes, commonly located in historic or scenic places. It allows adding multimedia elements to the real scenery by composing them in the image that is presented to the user. The multimedia elements can be defined and maintained using a simple Web page interface.

The Virtual Sightseeing™ takes advantage of the physical characteristics of a standard telescope, namely ease of use and generally known, to build an innovative system that can be used by anyone, anywhere. The multimedia information and virtual elements that are displayed are sensitive to the orientation and position of the device. They change as the user manually changes the orientation by moving the device. All the information presented in the device is geographically referenced.

### State of the art

Scenic viewers or telescopes and other similar devices are well known. However, a visualization device applying a technique superimposing in real-time images generated by a computer upon a real image, as described in this patent, is new. The state of the art prior to this invention is presented below.

The patent W0004/008427 of Yoram Baram and the patents US6037914 and GB2376397 of Hewlett Packard describe and claim portable devices that superimpose images generated by a computer upon real images displayed directly into the user's eyes.

The patents US2004/0080547, US2003/0179218 and US2002/0036649 present methods and devices that integrate real images with virtual images to apply on specific environments.

The following articles and publications are listed as state of the art references in several knowledge areas that are relevant to understand this patent:
1. Azuma, R.T. (1997). A Survey of Augmented Reality. Presence-Teleoperators and Virtual Environments, 6(4), pp. 355-385;
2. Azuma, R., Bailot, Y., Behringer, R., Feiner, S., Julier, S., and MacIntyre, B. (2001). Recent Advances in Augmented Reality. IEEE Computer & Graphics 21(6), pp. 34-47;
3. Azuma, R., Lee, J., Jiang, B., Park, J., You, S., and Neumann, U. (1999). Tracking in Unprepared Environments for Augmented Reality Systems. Journal of Computers & Graphics, 23 (26), pp. 787-793;
4. Berger, M.O., Wrobel-Dautcourt, B., Petitjean, S., and Simon, G. (1999). Mixing Synthetic and Video Images of an Outdoor Urban Environment. Machine Vision and Applications, 11(3), pp. 145-159;
5. Brooks, F.P. (1999). What's Real About Virtual Reality. IEEE Computer Graphics and Applications, 21(6), pp. 16-27;
6. Debevec, P.E. (1998). Rendering Synthetic Objects Into Real Scenes: Bridging Traditional and Image-Based Graphics with Global Illumination and High Dynamic Range Photography. Proceedings of SIGGRAPH'98, New York , NY;
7. Kutulakos, K.N. and Vallino, J.R. (1998). Calibration-free Augmented Reality. IEEE Transactions on Visualization and Computer Graphics, 4(1), pp. 1-20;
8. Livingston , M.A. and State, A. (1997). Magnetic Tracker Calibration for Improved Augmented Reality Registration. Presence-Teleoperators and Virtual Environments, 6(5), pp. 532-546;
9. Piekarski, W., Thomas, B., Hepworth, D., Gunther, B., and Demczuk, V. (1999). An Architecture for Outdoor Wearable Computers to support Augmented Reality and Multimedia Application. Proceedings of the 3rd International Conference on Knowledge-Based Intelligent Information Engineering Systems, Adelaide, Australia;
10. Rokita, P. (1998). Compositing Computer Graphics and Real World Video Sequences. Computer Networks and ISDN Systems, 30(20-21), pp. 2047-2057;
11. Roseblum, L. (2000). Virtual and Augmented Reality 2020. IEEE Computer Graphics and Applications, 20(1), pp. 38-39;
12. Starner, T., Schiele, B., Rhodes, B., Jebara, T., Oliver, N., Weaver, J., and Pentland, A. (1998). Augmented Realities Integrating User and Physical Models. First IEEE International Workshop on Augmented Reality (IWAR '98)', San Francisco, CA;
13. State, A., Hirota, G., Chen, D., Garrett, W., and Livingston . M. (1996). Superior Augmented Reality Registration by Integrating Landmark Tracking and Magnetic Tracking. Proceedings SIGGRAPH'96, New Orleans;
14. Thalmann , N.M. and Thalmann, D. (1997). Animating Virtual Actors in Real Environments. Multimedia Systems, 5(2), pp. 113-125. JP 09 096766 , and JP 04 195 014 disclose the provision of additional information in standard sight seeing telescopes.

The patents and references listed as state of the art are a starting point of the device's technology. However, to create the invention presented herein, a new system is developed, which incorporates anchoring and maneuverability characteristics that solve existing problems in the other systems.

### Description of invention

The physical structure supporting the Virtual Sightseeing™ is similar to a standard sightseeing telescope, however it includes distinct components for its new functionalities. The main components are a system to capture the real image (typically a video camera), a computer to process the real image and superimpose the virtual elements, and a screen to display the composed image. Sensors or image processing techniques are used to determine the orientation of the device. The user can interact with the device with a touch screen, buttons or simply by moving the device.

The position of the different components of the device was designed such that it can be as most user friendly as possible. The touch screen is incorporated in a mobile structure for better view and easy access. The handle is placed in front of the device for simple and intuitive user grip. In this handle there are two pressure buttons similar to those used in computer mouse devices. Sensors that measure orientation angles are placed in the axis of the mobile structure. The sensor that measures the top/down orientation is in the horizontal axis, while the sensor that measures the left/right orientation is inside the structure in the vertical axis. The light intensity and position can be estimated by the time of the day.

The system software represents the real camera in the virtual world in a virtual camera. This virtual camera has exactly the same characteristics as the real camera (focal length, position, orientation, etc.). If any of these characteristics in the real camera vary then the characteristics of the virtual camera change the same way. The dimensions of the virtual world are the same as the dimensions of the real world. A virtual wired frame model is developed to match the virtual and real elements. When the real camera moves, the virtual camera moves as well, in real time. If any three-dimensional object appears in front of the virtual camera (in the virtual world) then the object is superimposed upon the real image that is being captured in real time by the real camera.

From the user's viewpoint, the steps to run the system are:
- The first step is initialization, where the system collects all the contextual information from the server. When all the information is downloaded from the server, the system is ready to use and starts the Demonstration mode (optional) or the Application mode;
- When the system is in the Demonstration mode, a video is presented. The video can include advertisements, credits or other generic information. Depending on how it is set (optionally the system can be used by paying), the system starts the Application mode, which is when the Virtual Sightseeing™ actually works. In this mode, the user can interact with the elements in sight (real or virtual), play games, or use any other functionalities provided by the system;
- Finally, when time ends (according to the amount paid or by user's selection), a message of goodbye is displayed and the system returns to the Demonstration mode (optional) or turns inactive.

The system allows two kinds of users. The common user, who uses the Virtual Sightseeing™, and the administrator, who has the permission to change, add or clear virtual information. These changes can be done locally or remotely. The administrator can execute changes without going physically to where the Virtual Sightseeing™ is located. This is done using an internet connection and Web pages for configuration.

The only functionality provided by standard sight telescopes is to enlarge images. The Virtual Sightseeing™ includes a radically different functionality, including: find elements (through graphical representations and audio it is possible to guide the user), games over real images, composing virtual elements in real world scenes, virtual multimedia elements including text, images, audio and video with which the user can interact. For example, if the user points the Virtual Sightseeing™ to a museum, he or she can get information about the museum, including ticket price or the way to go to the museum.

In relation to existing augmented reality systems, the Virtual Sightseeing™ has a distinctive important characteristic, the use of a fixed physical structure with the following benefits:
- **Reliability**: If the degrees of freedom are well known, the main problem of augmented reality (tracking the user motion and orientation) can be solved.
- **Robustness**: Typical augmented reality systems are very sensitive to the surrounding environment. With a solid, fixed structure, these problems are minimized and the electric and mechanical components are protected.

Augmented reality technologies are usually applied in portable, mobile or wearable systems. These are often complex systems. In contrast, the Virtual Sightseeing™ is a device that uses a solid and fixed structure, working in real time, and targeting the average user with no previous experience. In a structure of this type, sensors that measure the orientation of the camera can be easily applied. This way, virtual elements can be placed in the exact position with the exact orientation and thus one of the main problems of augmented reality - know were the user is looking at - is solved.

In relation to the traditional see-through augmented reality glasses, the Virtual Sightseeing™ equipment has the advantage of being much more robust, reliable and ease to use. These glasses are often used in laboratory settings, while the purpose of the Virtual Sightseeing™ is to be used by the general public with low maintenance costs.

By knowing the position/orientation of the Virtual Sightseeing™ it is possible to use a virtual model that points where the virtual elements should be positioned. The sensors give information about the real camera to the virtual model which points where and how the virtual elements should be positioned. The information about the real camera makes it possible for a virtual camera to replicate the real camera in the virtual world.

The Virtual Sightseeing™ can also be used for other purposes other than sightseeing. It can also be used in:
- Finding items: The finding application changes the usual process of looking for objects by allowing selecting directly the objects to find in the device's screen;
- Games: Strategy games or 'first person shooter' games are easily implemented in the Virtual Sightseeing™ system. For example, in a Virtual Sightseeing™ placed on the top of a castle it is possible to simulate a historical battle and define the defence strategy against virtual enemies;
- Public participation: The Virtual Sightseeing™ allows easy assessment of impacts of planned constructions or other changes to the landscape. These elements can be superimposed upon real images for public participation and discussion;
- Multimedia content: The system links complex multimedia contents to items in the real world.

### Description of drawings

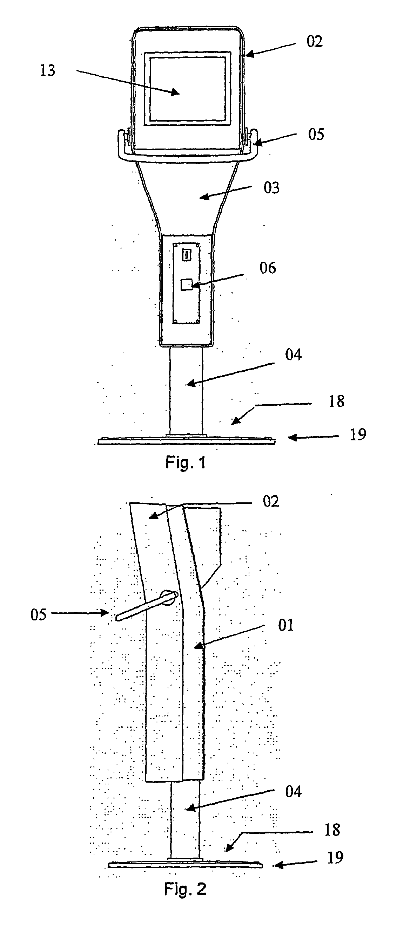

- **Figure 1**: shows a front side view of the invention;
- **Figure 2**: shows a right side view of the invention;

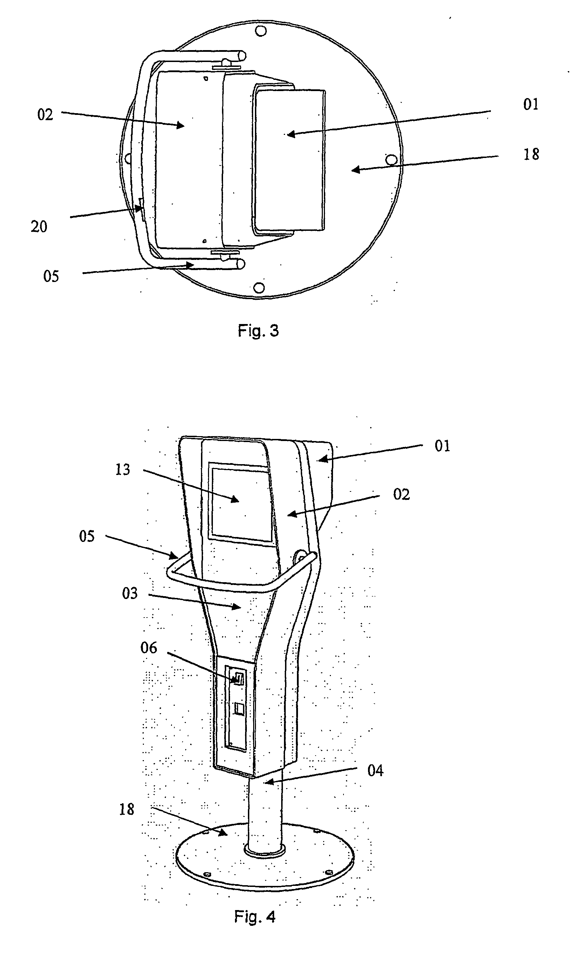

- **Figure 3**: shows a top side view of the invention;
- **Figure 4**: shows a front perspective view of the invention;

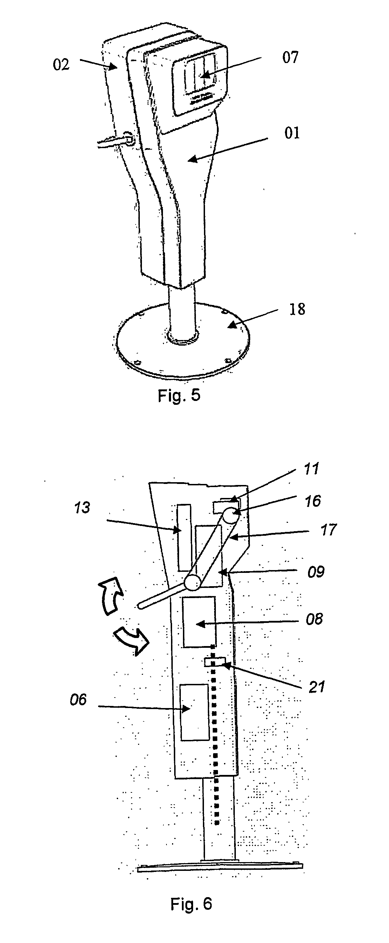

- **Figure 5**: shows a rear perspective view (from above) of the invention;
- **Figure 6**: shows a sectional view of the invention;

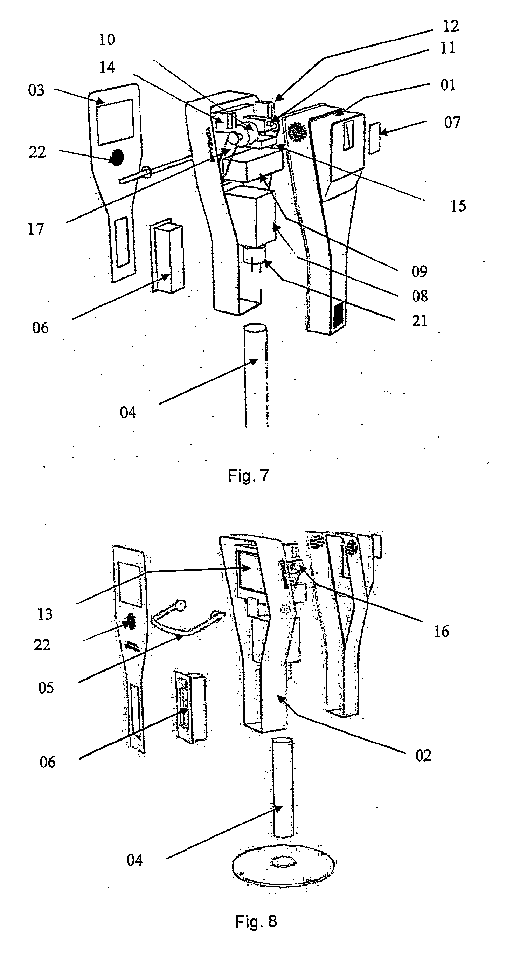

- **Figure 7**: shows a rear perspective exploded view of the invention;
- **Figure 8**: shows a front perspective exploded view of the invention.

The main components of the invention as referenced in the figures are:
- **part 01.**: Rear protection;
- **part 02.**: Main protection;
- **part 03.**: Front protection;
- **part 04.**: Vertical axis;
- **part 05.**: Handle;
- **part 06.**: Coin collection system;
- **part 07.**: Video camera's protecting glass;
- **part 08.**: CPU - processing unit;
- **part 09.**: UPS;
- **part 10.**: Video camera's rotation encoder (horizontal axis);
- **part 11.**: Video camera;
- **part 12.**: Auto-focus and zoom lens controller;
- **part 13.**: Screen;
- **part 14.**: Temperature control system;
- **part 15.**: Platform for anchoring the video camera;
- **part 16.**: Horizontal axis;
- **part 17.**: Internal transmission mechanism (to move the video camera);
- **part 18.**: Upper support base;
- **part 19.**: Lower support base;
- **part 20.**: Buttons;
- **part 21.**: Structure's rotation encoder (vertical axis);
- **part 22.**: Sound speakers.

### Headi Detailed description of the preferred representation of the invention

The base includes the vertical axis (part 04) and the support bases (parts 18 and 19) that support the Virtual Sightseeing™ system. The rear protection (part 01), the main protection (part 02) and the front protection (part 03) are attached to the vertical axis (part 04). The handle (part 05) is attached to the main protection to manoeuvre the Virtual Sightseeing™ .

The screen (part 13), attached to the front protection (part 03) is anti-vandalism. It can also be a touch screen for interactivity. Underneath the screen, also attached to the front protection (part 03), there are stereo sound speakers (part 22) for a better interaction with the invention.

The video camera (part 11) that captures the real images is inside the rear protection (part 01) and is protected by the video camera's protecting glass (part 07). Inside the protections, the video camera is attached to the platform for anchoring the video camera (part 15) along the horizontal axis (part 16). All this equipment is behind the screen (part 13). The rotation movement of the horizontal axis is induced by an internal transmission mechanism (part 17) from the handle (part 05). The rotation sensor (part 10) is attached to the horizontal axis (part 16) to capture the inclination angle of the video camera (part 11). To control the optical system of the video camera there is a lens controller (part 12) attached to the side of the rear protection. This controller controls the iris, focus and zoom of the video camera lens.

The temperature control system (part 14) that maintains the operational temperature inside the structure is on the side of the rear protection (part 01).

Two pressure buttons (part 20) are attached to the handle (part 05) as an alternative to the touch screen.

The coin collection system (part 06) is attached to the front protection (part 03). It launches the application and controls the operation time (proportional to the amount paid), it is anti-vandalism, and it includes a safe box.

Behind the coin collection system (part 06), attached to the main protection (part 02), there is a rotation sensor (part 21) that measures the rotation angle of the Virtual Sightseeing™ global structure.

The Virtual Sightseeing™ needs an industrial micro computer (part 08) to process the data and generate the images. This computer contains a signal acquisition board to get the data from the two rotation sensors, the coin collection system and the buttons. There is also a modem that uses mobile networks technology (GPRS) to allow connection to a remote server for maintenance, updating and collection of statistical data. For applications requiring mobility, a compass and a GPS can be incorporated. The UPS (part 09) allows appropriate system shut down in case of a failure in energy supply and it filters the voltage supply of the main systems.

For the several components of the invention, a preferred specification can be as follows:

| | |
|---|---|
| **Lens** | There are two possibilities for the lens: variable motorized or fixed zoom lens. The type could be 'CS' mounted and have auto-focus and auto-iris. If motorized, the lens could have an encoder attached to the motor providing feedback on the focal length of the lens. The zoom could vary between 5x and 15x. If the lens is fixed, its zoom will be adapted to the location. Considering that a standard scenic viewer has a zoom between 20x and 30x and that the Virtual Sightseeing™ is meant explore the sight more broadly, the fixed zoom should be 10x or 15x. |
| **Video Camera** | The video camera could be 'firewire' with a resolution of 1024x576 and could have automatic configurations, for example, 'auto-exposure' and 'white-balance'. |
| **TFT + Touch Screen** | 15" TFT monitor of 15" chassis mounted; SVGA maximum resolution 1024x768, 60 Hz; Touch technology. |
| **Industrial computer** | Intel PV CPU FSB800; AGP 8x; 512Mb RAM; 40Gb HD; FireWire; 4 slots PCI. |
| **Acquisition board** | Acquisition board 48 IO TTL PCI - High Current Bus. To get the data from the rotation sensors, focal length sensor, and coin collection system. |
| **GPRS modem** | Modem to connect remotely to the server; PCI or PCMCIA GSM/GPRS Triband. |
| **GPS and compass** | A compass and a GPS can be incorporated for orientation and positioning of the Virtual Sightseeing™. |
| **Rotation sensors** | Absolute encoders of 'single turn' with 14 bits of resolution (error: 3.8m to 10km) would be used. |
| **Coin collection system** | Application launching and time control system. Anti-vandalism and incorporated safe box. Security system for the safe box. |

The materials, sizes, shape and layout of the components depend on the other elements of the invention, under the scope of the claims.

## Claims

1. A VISUALIZATION APPARATUS OF INFORMATION SUPERIMPOSED UPON REAL IMAGES, in the field of augmented reality wherein the components provide for functionality in uncontrolled environments, comprising:
- a system for superimposing and visualizing information including a local and/ or remote database;
- an industrial computer (08) to process the apparatus positioning and compose the real image with the virtual elements;
- a base including the vertical axis (04) and the support bases (18 and 19) sustaining the whole apparatus, which structural enclosure (01, 02, 03) protects all the parts of the apparatus except those of interaction with the user; **characterized in that** the system comprises
- a device to measure the system's position and orientation in the form of a handle (05) that maneuvers the apparatus, which is incorporated to the structural enclosure, and that has at least two pressure buttons (20) for option selection to command and access information and content; where the horizontal and vertical directions of the apparatus are determined by sensors:
measuring the rotation movement in the horizontal axis (16) through a rotation sensor (10) coupled with a transmission system (17) and commanded through the handle (05) to command the inclination angle of the video camera (11); and
a position sensor that measures the left/right orientation of the structure in the vertical axis;
- a system for acquiring real images, typically a video camera (11), automatically aligned with the apparatus direction;
- a touch screen (13) to display the final image, command and access information and content;
- a controller (12) for the video camera's optical system, that controls the iris, focus and zoom of the video camera lens.

2. A VISUALIZATION APPARATUS OF INFORMATION SUPERIMPOSED UPON REAL IMAGES, according to claims 1, wherein the system that determines how the image composition is done relies on measured position and orientation.

3. A VISUALIZATION APPARATUS OF INFORMATION SUPERIMPOSED UPON REAL IMAGES, according to claims 1 and 2, wherein orientation and position parameters are determined by position sensors or image processing.

4. A VISUALIZATION APPARATUS OF INFORMATION SUPERIMPOSED UPON REAL IMAGES, according to claims 1, 2 and 3, wherein a database of content for superimposing is built-in or can be accessed remotely.

5. A VISUALIZATION APPARATUS OF INFORMATION SUPERIMPOSED = UPON REAL IMAGES, according to claims 1, 2, 3, and 4 wherein different means for information input can be used, including buttons and/or a touch screen adapted to several applications, namely access to information and content.

6. A VISUALIZATION APPARATUS OF INFORMATION SUPERIMPOSED UPON REAL IMAGES, according to claims 1, 2, 3, 4, and 5, wherein environmental conditions are estimated, including temperature and light, and the display is adapted to those conditions.

7. A VISUALIZATION APPARATUS OF INFORMATION SUPERIMPOSED UPON REAL IMAGES, according to claims 1, 2, 3, 4, 5, and 6, wherein a physical structure that integrates visualization of information, measurement of position and orientation, and overlaying information can be subject to indoors and outdoors conditions and work autonomously by means of an antivandalic screen (13), a robust structural enclosure (03) and a temperature control system (14) that maintains the operational temperature inside the structure, located on the side of the rear protection (01).

8. A VISUALIZATION APPARATUS OF INFORMATION SUPERIMPOSED UPON REAL IMAGES, according to claims 1, 2, 3, 4, 5, 6, and 7, wherein the physical structure is transportable but only operational in a presetted fixed location with a position and a set of possible presetted orientations.

9. VISUALIZATION APPARATUS OF INFORMATION SUPERIMPOSED UPON REAL IMAGES, according to claims 1, 2, 3, 4, 5, 6, 7, and 8, wherein contents to be displayed are advertising, games, public presentations and historical simulations.

## Patentansprüche

1. Visualisierungsvorrichtung für Realbildern überlagerte Informationen auf dem Gebiet der erweiterten Realität, wobei die Komponenten Funktionalität in unkontrollierten Umgebungen gewährleisten, umfassend:
- ein System zum Überlagern und Visualisieren von Informationen, das eine lokale und/oder abgesetzte Datenbank enthält;
- einen industriellen Computer (08) zum Verarbeiten der Positionierung der Vorrichtung und zum Zusammenstellen des Realbilds mit den virtuellen Elementen;
- eine Basis, die die vertikale Achse (04) und die Trägerbasen (18 und 19) enthält, die die gesamte Vorrichtung aufrechterhalten, wobei das strukturelle Gehäuse (01, 02, 03) alle Teile der Vorrichtung mit Ausnahme der zur Interaktion mit dem Benutzer schützt; **dadurch gekennzeichnet, dass** das System Folgendes umfasst:
- eine Einrichtung zur Messung der Position und Orientierung des Systems in Form eines Griffs (05), der die Vorrichtung manövriert, der mit dem strukturellen Gehäuse integriert ist und der mindestens zwei Drucktasten (20) zur Optionsauswahl zum Befehligen und Zugreifen auf Informationen und Inhalt aufweist; wobei die horizontale und die vertikale Richtung der Vorrichtung durch Sensoren bestimmt werden;
Messung der Drehbewegung in der horizontalen Achse (16) durch einen Drehungssensor (10), der mit einem Übertragungssystem (17) gekoppelt und durch den Griff (05) befehligt wird, um den Neigungswinkel der Videokamera (11) zu befehlen; und
- einen Positionssensor, der die Links-/ Rechtsorientierung der Struktur in der vertikalen Achse misst;
- ein System zum Beschaffen von Realbildern, typischerweise eine Videokamera (11), das automatisch mit der Richtung der Vorrichtung ausgerichtet wird;
- einen Berührungsschirm (13) zum Anzeigen des Endbildes, der Befehl- und Zugangsinformationen und des Inhalts;
- eine Steuerung (12) für das optische System der Videokamera, die die Blende, den Fokus und Zoom der Videokameralinse steuert.

2. Visualisierungsvorrichtung für Realbildern überlagerte Informationen nach Anspruch 1, wobei das System, das bestimmt, wie die Bildzusammenstellung erfolgt, gemessene Position und Orientierung verwendet.

3. Visualisierungsvorrichtung für Realbildern überlagerte Informationen nach Anspruch 1 und 2, wobei Orientierungs- und Positionsparameter durch Positionssensoren oder Bildverarbeitung bestimmt werden.

4. Visualisierungsvorrichtung für Realbildern überlagerte Informationen nach Anspruch 1, 2 und 3, wobei eine Datenbank von Inhalt zur Überlagerung eingebaut ist oder aus der Ferne zugänglich ist.

5. Visualisierungsvorrichtung für Realbildern überlagerte Informationen nach Anspruch 1, 2, 3 und 4, wobei verschiedene Mittel zur Informationseingabe verwendet werden können, darunter Tasten und/oder ein Berührungsschirm mit Eignung für mehrere Anwendungen, nämlich Zugang zu Informationen und Inhalt.

6. Visualisierungsvorrichtung für Realbildern überlagerte Informationen nach Anspruch 1, 2, 3, 4 und 5, wobei Umgebungsbedingungen geschätzt werden, darunter Temperatur und Licht, und die Anzeige für diese Bedingungen geeignet ist.

7. Visualisierungsvorrichtung für Realbildern überlagerte Informationen nach Anspruch 1, 2, 3, 4, 5 und 6, wobei eine physische Struktur, die die Visualisierung von Informationen, Messung von Position und Orientierung und das Überlagern von Informationen integriert, Innen- und Außenbedingungen unterzogen werden kann und autonom mittels eines Antivandalismus-Bildschirms (13), eines robusten strukturellen Gehäuses (03) und eines Temperaturregelsystems (14), das die Betriebstemperatur in der Struktur aufrechterhält, das sich an der Seite der Rückprojektion (01) befindet, arbeitet.

8. Visualisierungsvorrichtung für Realbildern überlagerte Informationen nach Anspruch 1, 2, 3, 4, 5, 6 und 7, wobei die physische Struktur transportabel, aber nur an einem voreingestellten festen Ort mit einer Position und einer Menge von möglichen voreingestellten Orientierungen funktionsfähig ist.

9. Visualisierungsvorrichtung für Realbildern überlagerte Informationen nach Anspruch 1, 2, 3, 4, 5, 6, 7 und 8, wobei anzuzeigende Inhalte Werbung, Spiele, öffentliche Präsentationen und geschichtliche Simulationen sind.

## Revendications

1. APPAREIL POUR LA VISUALISATION D'INFORMATIONS SUPERPOSÉES À DES IMAGES RÉELLES, dans le domaine de la réalité enrichie, dans lequel les composants fournissent une fonctionnalité dans des environnements non contrôlés, comprenant :
- un système permettant de superposer et de visualiser des informations incluant une base de données locale et/ou à distance,
- un ordinateur industriel (08) permettant de traiter le positionnement de l'appareil et de composer l'image réelle avec les éléments virtuels,
- une base comprenant l'axe vertical (04) et les bases de support (18 et 19) soutenant l'appareil dans son ensemble, une enceinte structurelle (01, 02, 03) qui protège toutes les parties de l'appareil à l'exception de celles qui interagissent avec l'utilisateur,
**caractérisé en ce que** le système comprend
- un dispositif permettant de mesurer la position et l'orientation du système sous la forme d'une poignée (05) qui manoeuvre l'appareil, laquelle est incorporée à l'enceinte structurelle et qui possède au moins deux boutons poussoirs (20) en vue de la sélection de l'option de commande et d'accès aux informations et au contenu, où les directions horizontale et verticale de l'appareil sont déterminées par des capteurs :
la mesure du mouvement de rotation selon l'axe horizontal (16) par l'intermédiaire d'un capteur de rotation (10) couplé à un système de transmission (17) et commandé par l'intermédiaire de la poignée (05) afin de commander l'angle d'inclinaison de la caméra vidéo (11), et un capteur de position qui mesure l'orientation gauche/droite de la structure dans l'axe vertical,
- un système permettant de capturer des images réelles, de manière caractéristique une caméra vidéo (11), alignée automatiquement avec la direction de l'appareil,
- un écran tactile (13) permettant d'afficher l'image finale, de commander et d'accéder aux informations et au contenu,
- un contrôleur (12) destiné au système optique de caméra vidéo qui commande l'iris, la mise au point et le changement de grossissement de l'objectif de l'appareil de prise de vues vidéo.

2. APPAREIL POUR LA VISUALISATION D'INFORMATIONS SUPERPOSÉES À DES IMAGES RÉELLES selon la revendication 1, dans lequel le système qui détermine comment est réalisée la composition de l'image repose sur la position et l'orientation mesurées.

3. APPAREIL POUR LA VISUALISATION D'INFORMATIONS SUPERPOSÉES À DES IMAGES RÉELLES selon les revendications 1 et 2, dans lequel les paramètres d'orientation et de position sont déterminés par des capteurs de position ou par le traitement de l'image.

4. APPAREIL POUR LA VISUALISATION D'INFORMATIONS SUPERPOSÉES À DES IMAGES RÉELLES selon les revendications 1, 2 et 3, dans lequel est constituée une base de données de contenu de superposition, ou bien à laquelle on peut accéder à distance.

5. APPAREIL POUR LA VISUALISATION D'INFORMATIONS SUPERPOSÉES À DES IMAGES RÉELLES selon les revendications 1, 2, 3 et 4, dans lequel différents moyens pour l'accès aux informations peuvent être utilisés, y compris des boutons et/ou un écran tactile conçu pour plusieurs applications, à savoir l'accès aux informations et au contenu.

6. APPAREIL POUR LA VISUALISATION D'INFORMATIONS SUPERPOSÉES À DES IMAGES RÉELLES selon les revendications 1, 2, 3, 4 et 5, dans lequel les conditions environnementales sont estimées, y compris la température et la lumière, et où l'afficheur est adapté à ces conditions.

7. APPAREIL POUR LA VISUALISATION D'INFORMATIONS SUPERPOSÉES À DES IMAGES RÉELLES selon les revendications 1, 2, 3, 4, 5 et 6, dans lequel une structure physique qui intègre la visualisation des informations, la mesure de position et d'orientation et la superposition des informations peut être soumise à des conditions d'environnement intérieur et extérieur et travaille de manière autonome au moyen d'un écran contre le vandalisme (13), une enceinte structurelle robuste (03) et un système de commande de température (14) qui maintient la température fonctionnelle à l'intérieur de la structure, lesquels sont situés sur le côté de la protection arrière (01).

8. APPAREIL POUR LA VISUALISATION D'INFORMATIONS SUPERPOSÉES À DES IMAGES RÉELLES selon les revendications 1, 2, 3, 4, 5, 6 et 7, dans lequel la structure physique est transportable mais elle n'est opérationnelle que sur un emplacement fixe préétabli avec une position et un ensemble d'orientations préétablies possibles.

9. APPAREIL POUR LA VISUALISATION D'INFORMATIONS SUPERPOSÉES À DES IMAGES RÉELLES selon les revendications 1, 2, 3, 4, 5, 6, 7 et 8, dans lequel les contenus à afficher sont des publicités, des jeux, des présentations publiques et des simulations historiques.
